# EUROPÄISCHE PATENTSCHRIFT

(11) **EP 3 378 298 B1**
(45) Veröffentlichungstag und Bekanntmachung des Hinweises auf die Patenterteilung: **13.05.2020**
(21) Anmeldenummer: 18401026.2
(22) Anmeldetag: 09.03.2018
(51) Int. Cl.: A01B 69/00, A01D 41/127, A01B 69/04, A01B 79/00

(54) **LANDWIRTSCHAFTLICHES TERMINAL**
AGRICULTURAL TERMINAL
TERMINAL AGRICOLE

(30) Priorität: 15.03.2017 DE 102017105496
(43) Veröffentlichungstag der Anmeldung: 26.09.2018
(73) Patentinhaber: Amazonen-Werke H. Dreyer GmbH & Co. KG, 49205 Hasbergen (DE)
(72) Erfinder: Sia, Tim-Randy, 49179 Ostercappeln (DE); Kühn, Christoph, 49080 Osnabrück (DE); Konermann, Thomas, 49479 Ibbenbüren (DE); Käller, Michael, 490324 Melle (DE)

(56) Entgegenhaltungen:
- EP-A1- 2 944 175
- EP-A1- 3 120 678
- DE-A1-102014 102 489
- US-A1- 2012 256 843
- US-A1- 2014 298 228

## Beschreibung

Die Erfindung betrifft ein Terminal zur Steuerung einer landtechnischen Maschine gemäß dem Oberbegriff des Patentanspruches 1.

Die zunehmende Komplexität landtechnischer Maschinen bedingt eine immer größere Detailtiefe von Einstellparametern dieser Maschinen. Um eine Bearbeitung mit der jeweiligen Maschine durchzuführen, muss also eine zunehmend große Anzahl von Parametern für die jeweils verwendete Maschine einstellbar sein und eine entsprechende Fülle von Informationen anzeigbar sein. Für derartige Zwecke hat sich die Verwendung von sogenannten Terminals für die Steuerung von landtechnischen Maschinen durchgesetzt. Diese Terminals ermöglichen es dem Benutzer die gewünschten Parameter der landtechnischen Maschine einzustellen und die jeweils gewünschten Informationen anzuzeigen.

Derartige Terminals sind typischerweise in der Kabine eines Schleppers, an den die landtechnische Maschine angekoppelt ist, oder einer selbstfahrenden landtechnischen Maschine angeordnet. Aufgrund der Vielzahl von Bedienelementen in der Kabine des Schleppers ist der verfügbare Platz oft stark limitiert, so dass die Größe derartiger Terminals begrenzt ist. Aus diesem Grund verfügen landwirtschaftliche Terminals oftmals über berührungsempfindliche Bildschirme mit integrierten Bedienelementen, so dass die verfügbare Anzeigefläche maximiert werden kann. Teilweise werden in den Terminals auch berührungsempfindliche Bildschirme mit physikalischen Knöpfen und Tastern kombiniert, welche den Vorteil einer haptischen Rückmeldung eines Schaltereignisses bieten.

Ein derartiges Terminal wird beispielsweise durch die US2012/0256843A1 offenbart. Dieses Terminal zeigt einen berührungsempfindlichen Bildschirm und verschiedene Bedienelemente. Die Menüoberfläche des Terminal ermöglicht die Einstellung verschiedenster Parameter und die Anzeige von weitreichenden Informationen des Arbeitsprozesses. So können beispielsweise Maschinenparameter angezeigt und ausgelesen werden. Auch ist vorgesehen die Maschine auf der bearbeiteten Fläche in einer Kartenansicht darzustellen. Ebenso können mittels des Terminals Kurzwahltasten eines mit dem Terminal verbundenen Handgriffs mit Funktionen belegt werden. In Vorbereitung des eigentlichen Bearbeitungsvorganges können somit mittels verschiedener Menüs das Terminal selbst, Peripheriegeräte und die zu steuernden Maschinen mittels des Terminals eingestellt und eingerichtet werden.

Während des Bearbeitungsvorganges mit der landtechnischen Maschine auf der landwirtschaftlichen Fläche wird oftmals die Kartenansicht verwendet, um den Bearbeitungsvorgang zu überwachen. Die Kartenansicht ermöglicht es in der Regel die aktuelle Position auf der landwirtschaftlichen Fläche, die bereits bearbeitete und die noch unbearbeitete Fläche sowie die Feldgrenze anzuzeigen. Zudem ist oftmals eine Unterscheidung zwischen aktivierten und nichtaktivierten Teilbreiten der landtechnischen Maschine und eine Anzeige deren Position möglich. Wichtige Statusinformationen, wie die Größe der bereits bearbeiteten Fläche, der Restinhalt eines Vorratstanks oder die aktuelle Geschwindigkeit lassen sich oftmals zusätzlich anzeigen. Um möglichst viele Informationen des Arbeitsvorganges möglichst übersichtlich anzuzeigen ist es wünschenswert, die Größe des Bildschirmbereichs, der für die Anzeige von Informationen zur Verfügung steht so groß wie möglich zu wählen. Allerdings kollidiert dies mit dem Interesse des Benutzers die Parameter des Bearbeitungsvorganges und der Kartenansicht möglichst effizient und übersichtlich Überwachen und Einstellen zu können, da die Anzahl der gleichzeitig anzeigbaren Bedienelemente zur Einstellung dieser Parameter mit dem Interesse einer Maximierung der dargestellten Kartengröße kollidiert.

Aufgabe der vorliegenden Erfindung ist es, ein landwirtschaftliches Terminal anzugeben, welches die Nachteile des Standes der Technik behebt und eine optimierte Kartenansicht bereitstellt, welche hinsichtlich der Kartengröße und der Einstellbarkeit von Parametern optimiert ist.

Diese Aufgabe wird durch den kennzeichnenden Teil des Anspruchs 1 gelöst. Demnach stellt das Terminal in der Kartenansicht wahlweise die Bedienelemente zur Anpassung der Kartenansicht oder die Bedienelemente zur Anpassung der Einstellparameter dar und blendet zudem permanent eine Taste auf dem berührungsempfindlichen Bildschirm ein, wobei eine Betätigung dieser Taste jeweils einen Wechsel zwischen der Darstellung der Bedienelemente der Kartenansicht und der Darstellung der Bedienelemente zur Anpassung der Einstellparameter auslöst. Um den Arbeitsprozess zu optimieren muss dem Benutzer Zugriff gegeben werden auf die Einstellparameter der jeweils verwendeten landtechnischen Maschine. So müssen situationsbedingt beispielsweise die jeweils ausgebrachte Menge an Gut bei einer Verteilmaschine angepasst oder einzelne Teilbreiten bei einer Verteilmaschine an- oder abgeschaltet werden. Auch ist es wünschenswert die Parameter, welche die Kartenansicht direkt oder indirekt betreffen, einstellen zu können. Beispielsweise die Markierung eines Hindernisses auf der Karte oder die Aktivierung oder Deaktivierung eines automatischen Lenksystems. Um die dargestellte Kartengröße zu maximieren und gleichzeitig eine optimierte Bedienbarkeit und Einstellbarkeit der verschiedenen Parameter zu gewährleisten ist also erfindungsgemäß vorgesehen, dass einerseits Bedienelemente zur Anpassung der Kartenansicht bzw. Bedienelemente, die die Kartenansicht betreffen und andererseits Bedienelemente zur Anpassung von Einstellparametern der landtechnischen Maschine in der Kartenansicht anzeigbar sind. Es werden also virtuelle Bedienelemente in der Kartenansicht angezeigt, welche durch Berührung aktiviert werden können, um die gewünschten Einstellungen vorzunehmen oder Parameter anzuzeigen. Erfindungsgemäß wird unterschieden zwischen Bedienelementen zur Anpassung der Kartenansicht und Bedienelementen zur Anpassung der Einstellparameter der landtechnischen Maschine. Erstere zeichnen sich dadurch aus, dass sie die Navigation der landtechnischen Maschine auf der landwirtschaftlichen Fläche, eine Darstellung einer bestimmten Information auf der Karte oder die Aufzeichnung und/oder Darstellung von geographischen Informationen betreffen. Zusätzlich ist vorgesehen, dass mittels einer Taste auf dem berührungsempfindlichen Bildschirm in der Kartenansicht jederzeit zwischen einer Darstellung der Bedienelemente zur Einstellung der Einstellparameter der landtechnischen Maschine und den Bedienelementen zur Anpassung der Kartenansicht gewechselt werden kann. Auf diese Weise müssen nicht alle relevanten Bedienelemente gleichzeitig dargestellt werden. Vielmehr kann mittels eines Drucks auf die permanent dargestellte virtuelle Taste zwischen zwei Menüfeldern gewechselt werden, so dass die Bedienelemente dieser beiden Menüfelder nicht gleichzeitig dargestellt werden müssen und somit der Bereich Kartenansicht der für die Darstellung von Informationen verwendet werden kann, beispielsweise die Position der landtechnischen Maschine auf der landwirtschaftlichen Fläche maximiert wird.

In einer vorteilhaften Weiterbildung der Erfindung umfassen die Einstellparameter eine Einstellung zumindest eines der folgenden Parameter:
- Ausbringmenge
- An- und/oder Abschalten bestimmter Teilbreiten
- Verteilcharakteristik
- Arbeitsbreite
- Arbeitstiefe
und steuert das Terminal Aktoren an einer landtechnischen Maschine derart an, dass eine geänderte Einstellung der Einstellparameter bei der Bearbeitung durch die landtechnische Maschine berücksichtigt wird. Auf diese Weise können besonders zeitsparend und effizient während der Bearbeitung einzustellende Einstellparameter direkt in der Kartenansicht verändert werden und werden die Einstellparameter direkt an die landtechnische Maschine übermittelt und durch diese verarbeitet.

In einer vorteilhaften Weiterbildung der Erfindung umfasst eine Anpassung der Kartenansicht zumindest einen der folgenden Parameter:
- Erstellung von Spurlinien
- Aktivierung oder Deaktivierung eines Automatikmodus
- Aufrufen der Feldverwaltung
- Aktivierung eines Lenksystems
- Berechnung von Feldgrenzen
- Markieren von Hindernissen.

Diese Parameter sind besonders vorteilhaft während der Bearbeitung der landwirtschaftlichen Fläche aus der Kartenansicht anzupassen. So kann beispielsweise direkt ein aufgefundenes Hindernis in der Karte markiert oder nach dem Umrunden eines Feldes die mittels eines GPS-Empfängers aufgezeichnete Strecke als Feld berechnet und in der Feldverwaltung angelegt werden.

Weitere vorteilhafte Ausgestaltungen ergeben sich aus der Beispielsbeschreibung. Hierbei zeigen
- Fig. 1: eine erfindungsgemäße Kartenansicht eines erfindungsgemäßen Terminals mit Bedienelementen die Kartenansicht betreffend und
- Fig. 2: eine erfindungsgemäße Kartenansicht eines erfindungsgemäßen Terminals mit Bedienelementen zur Einstellung von Einstellparametern der landtechnischen Maschine.

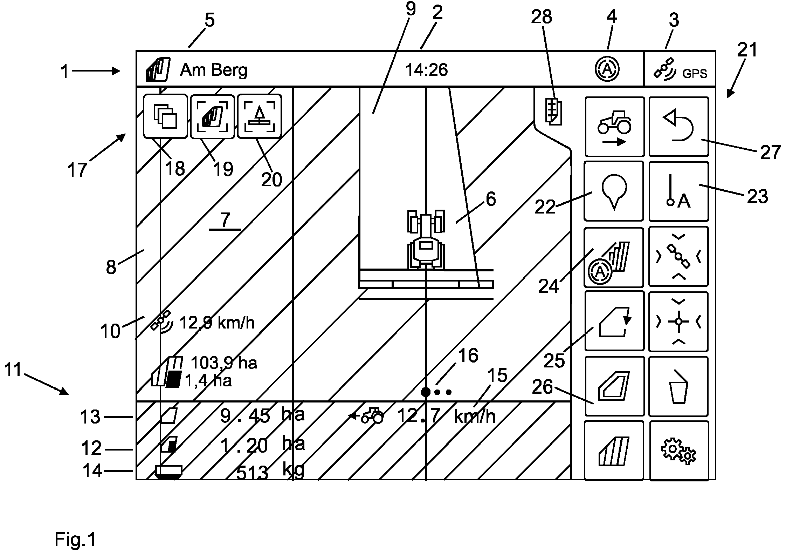

Eine erfindungsgemäße Kartenansicht ist in Fig. 1 gezeigt. Dargestellt ist die Bildschirmansicht eines erfindungsgemäßen Terminals. Dieses zeigt im oberen Bereich 1 mehrere Symbole zur Anzeige verschiedener Informationen in einer Statusleiste. Diese kann beispielsweise die Angabe einer Uhrzeit 2, der Qualität eines GPS-Signals 3, die Aktivierung eines Automatikmodus 4 oder die derzeitige Position auf einer bekannten landwirtschaftlichen Fläche 5 umfassen. Zudem ist eine landtechnische Maschine 6 gezeigt, die eine landwirtschaftliche Fläche 7 bearbeitet, wobei die bearbeitete Fläche 8 farblich abweichend von der unbearbeiteten Fläche 9 dargestellt oder mittels eines Schraffur markiert sein kann. Verschiedene Informationen werden im Bereich der landwirtschaftlichen Fläche dargestellt, wie die mittels GPS-Signalen ermittelte Geschwindigkeit 10. Zudem ist im unteren Bereich 11 der Kartenansicht eine Miniaturansicht vorhanden, welche Auskunft gibt über die bearbeitete Fläche 12, die Gesamtfläche 13, die Restmenge 14 an landwirtschaftlichem Gut in einem Behälter und die Geschwindigkeit 15, welche mittels alternativer Sensoren, beispielsweise an den Rädern von Traktor oder angekoppelter Maschine ermittelt worden sein kann. Die Punkte 16 zeigen an, dass weitere Informationen in der Miniaturansicht dargestellt werden können, welche durch eine berührende, horizontale Wischgeste jeweils wahlweise angezeigt oder ausgeblendet werden können. Im Bereich 17 sind drei Bedienelemente zur Anpassung der Darstellung in der Kartenansicht dargestellt. Das erste Element 18 kann verwendet werden, um Applikationskarten ein- oder auszublenden, das zweite Element 19 die bearbeitete Fläche in einer Übersichtsdarstellung anzuzeigen oder auszublenden und das dritte Element 20, die landtechnische Maschine in der Kartenansicht zu fokussieren bzw. zu zentrieren. Insbesondere kann vorgesehen sein, das Element 20 nur dann einzublenden, wenn die landtechnische Maschine 6 nicht fokussiert bzw. zentriert ist.

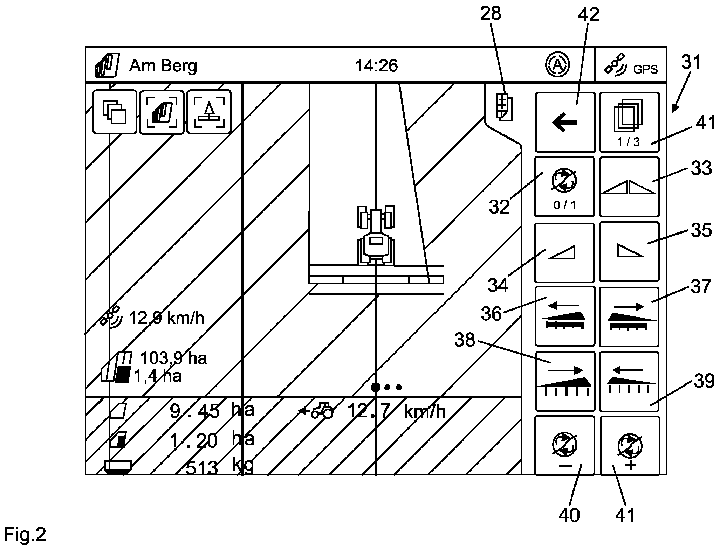

Auf der rechten Seite 21 sind verschiedene virtuelle Bedienelemente dargestellt. Durch Berührung der verschiedenen Bedienelemente können jeweils für die Kartenansicht relevante Informationen angezeigt bzw. Parameter eingestellt werden. Beispielsweise können mittels des Bedienelementes 22 sogenannte Points-of-Interest auf der Karte markiert werden, welche beispielsweise die Position eines Hindernisses markieren können. Mittels des Bedienelementes 23 kann die Aufzeichnung einer sogenannten A-B-Linie oder Masterfahrspur für die Erzeugung eines Fahrspursystems aktiviert werden. Bedienelement 24 startet einen Automatikmodus zur automatischen Bearbeitung der landwirtschaftlichen Fläche. Bedienelement 25 startet einen Modus zur Aufzeichnung einer Feldgrenze mittels Umrundung der zu ermittelnden Fläche und Speicherung der GPS-Koordinaten während der Umrundung. Mittels Bedienelement 26 kann dann aus den gespeicherten Daten eine Feldgrenze errechnet werden. Weitere Bedienelemente sind denkbar, beispielsweise zum Aufrufen eines Menüs zur Veränderung von allgemeinen Menü- oder Terminalparametern, zum Verwerfen von aufgezeichneten Feldgrenzdaten usw. Ein Wechsel in eine nicht dargestellte Menüansicht aus welcher verschiedene Untermenüs, wie die in Fig. 1 und Fig. 2 gezeigte Kartenansicht aufrufbar sind, kann vorzugsweise durch das Betätigen des Elementes 27 erfolgen.

Erfindungsgemäß ist nun eine Taste 28 vorgesehen, welche eine Änderung der dargestellten Bedienelemente im Bereich 21 bewirkt. Mit anderen Worten wird durch ein Betätigen der Taste 28, welche als virtuelles Bedienelement ausgestaltet ist, ein Wechsel der dargestellten Bedienelemente im Bereich 21 ausgelöst. Insbesondere ist erfindungsgemäß vorgesehen durch eine Betätigung der Taste 28 von einer Menüansicht entsprechend Fig. 1 mit Bedienelementen zur Anpassung der Kartenansicht zu wechseln zu einer Menüansicht entsprechend der Fig. 2 mit Bedienelementen zur Anpassung von Einstellparametern der landtechnischen Maschine und umgekehrt.

Es kann vorgesehen sein, dass die jeweils in einer Menüansicht gemäß Fig. 1 dargestellten Bedienelemente zur Anpassung der Kartenansicht konfigurierbar sind. So kann vorgesehen sein, dass der Benutzer in einem Konfigurationsmenü diejenigen Bedienelemente aus einer Mehrzahl von Bedienelementen auswählt, die er dargestellt bekommen möchte. Dies gilt in gleicher Weise für Bedienelemente gemäß Fig. 2 zur Anpassung von Einstellparametern der landtechnischen Maschine. Alternativ kann natürlich vorgesehen sein, dass die Art und Anordnung der angezeigten Bedienelemente fest vorgegeben ist.

Eine Darstellung einer Kartenansicht mi verschiedenen Bedienelemente zur Anpassung der Einstellparameter der landtechnischen Maschine ist in Fig. 2 gezeigt. In diese Ansicht kann beispielsweise durch Betätigung des Bedienelementes 28 aus der Kartenansicht gemäß Fig. 1 gewechselt werden. Umgekehrt ist ein Wechsel aus einer Kartenansicht gemäß Fig. 2 in eine Kartenansicht mit Bedienelementen gemäß Fig. 1 durch erneutes Betätigen des Bedienelementes 28 vorgesehen.

Die verschiedenen Bedienelemente im Bereich 31 der Fig. 2 dienen zur Einstellung von Einstellparametern der landtechnischen Maschine. Beispielsweise kann bei Verteilmaschinen, insbesondere in diesem Fall bei Düngerstreuern, vorgesehen sein mittels eines Bedienelementes 32 die Streuscheiben je nach derzeitigem Zustand der Streuscheiben an- bzw. abzuschalten, mittels eines Bedienelementes 33 die Dosierschieber beider Streuscheiben je nach derzeitiger Position der Dosierschieber zu öffnen bzw. zu schließen, mittels des Bedienelementes 34 den in Fahrtrichtung gesehen linken Dosierschieber bzw. mittels des Bedienelementes 35 den in Fahrtrichtung gesehen rechten Dosierschieber zu öffnen bzw. zu schließen. Der Streufächer von Düngerstreuern wird zunehmend derart segmentiert, dass dieser in eine festgelegte Anzahl von Teilbreiten eingeteilt wird, analog zu der Zusammenfassung von Spritzdüsen bei einer Feldspritze in eine festgelegte Anzahl von Teilbreiten. Mittels der Bedienelemente 36 und 37 können die einzelnen Teilbreiten von innen nach außen für die in Fahrtrichtung gesehen linke Seite (Bedienelement 36) bzw. rechte Seite (Bedienelement 37) sukzessive zugeschaltet, der Verteilbereich also entsprechend verbreitert, werden. Umgekehrt können mittels der Bedienelemente 38 und 39 die Teilbreiten von außen nach innen sukzessive für die rechte und linke Seite abgeschaltet, der Verteilbereich also entsprechend verkleinert, werden. Eine Reduzierung der Drehzahl ist mittels des Bedienelementes 40 und eine Erhöhung der Drehzahl mittels des Bedienelementes 41 möglich. Es kann zudem ein Bedienelement 42 vorgesehen sein, mittels welchem zwischen mehreren, in diesem Fall drei, Ansichten für den Bereich 31 gewechselt werden kann, wobei jede Ansicht verschiedene Bedienelemente für unterschiedliche Funktionen bzw. Einstellparameter der landtechnischen Maschine bereitstellt. Mittels eines Bedienelementes 42 kann zudem in ein übergeordnetes Menü gewechselt werden.

## Patentansprüche

1. Landwirtschaftliches Terminal zur Steuerung einer landtechnischen Maschine, wobei das Terminal über einen berührungsempfindlichen Bildschirm verfügt, wobei das Terminal mit einem Positionserfassungssystem verbunden und ausgebildet ist, die aktuelle Position der landtechnischen Maschine in einer Kartenansicht auf einer landwirtschaftlichen Fläche anzuzeigen, wobei das Terminal ferner ausgebildet ist, berührungsempfindliche Bedienelemente zur Anpassung der Kartenansicht (22, 23, 24, 25, 26) und zur Anpassung von Einstellparametern der landtechnischen Maschine (32, 33, 34, 35, 36, 37, 38, 39, 40, 41) auf dem Bildschirm anzuzeigen,
**dadurch gekennzeichnet, dass**,
das Terminal konfiguriert ist, in der Kartenansicht wahlweise die Bedienelemente zur Anpassung der Kartenansicht (22, 23, 24, 25, 26) oder die Bedienelemente zur Anpassung der Einstellparameter (32, 33, 34, 35, 36, 37, 38, 39, 40, 41) darzustellen und zudem permanent eine Taste (28) auf dem berührungsempfindlichen Bildschirm einzublenden, wobei ein Betätigen dieser Taste (28) jeweils einen Wechsel zwischen der Darstellung der Bedienelemente der Kartenansicht (22, 23, 24, 25, 26) und der Darstellung der Bedienelemente zur Anpassung der Einstellparameter (32, 33, 34, 35, 36, 37, 38, 39, 40, 41) auslöst.

2. Landwirtschaftliches Terminal nach Anspruch 1, **dadurch gekennzeichnet, dass** die Einstellparameter eine Einstellung zumindest eines der folgenden Parameter umfassen:
- Ausbringmenge
- An- und/oder Abschalten bestimmter Teilbreiten
- Verteilcharakteristik
- Arbeitsbreite
- Arbeitstiefe
und dass das Terminal Aktoren an einer landtechnischen Maschine derart ansteuert, dass eine geänderte Einstellung der Einstellparameter bei der Bearbeitung durch die landtechnische Maschine berücksichtigt wird.

3. Ladwirtschaftliches Terminal nach Anspruch 1 oder 2, **dadurch kennzeichnet, dass** eine Anpassung der Kartenansicht zumindest einen der folgenden Parameter umfasst:
- Erstellung von Spurlinien
- Aktivierung oder Deaktivierung eines Automatikmodus
- Aufrufen der Feldverwaltung
- Aktivierung eines Lenksystems
- Berechnung von Feldgrenzen
- Markieren von Hindernissen.

## Claims

1. Agricultural terminal for controlling an agricultural machine, wherein the terminal has a touch-sensitive screen, wherein the terminal is connected to a position sensing system and is configured to display the current position of the agricultural machine in a map view on an agricultural area, wherein the terminal is furthermore configured to display touch-sensitive operating elements for adapting the map view (22, 23, 24, 25, 26) and for adapting setting parameters of the agricultural machine (32, 33, 34, 35, 36, 37, 38, 39, 40, 41) on the screen
**characterized in that**
the terminal is configured to represent in the map view as desired either the operating elements for adapting the map view (22, 23, 24, 25, 26) or the operating elements for adapting the setting parameters (32, 33, 34, 35, 36, 37, 38, 39, 40, 41) and in addition to insert permanently a button (28) on the touch-sensitive screen, wherein actuating said button (28) initiates in each case a change between the representation of the operating elements of the map view (22, 23, 24, 25, 26) and the representation of the operating elements for adapting the setting parameters (32, 33, 34, 35, 36, 37, 38, 39, 40, 41).

2. Agricultural terminal according to Claim 1, **characterized in that** the setting parameters comprise a setting of at least one of the following parameters:
- application rate
- switching specific partial widths on and/or off
- distribution characteristic
- working width
- working depth
and **in that** the terminal controls actuators on an agricultural machine in such a way that a changed setting of the setting parameters is taken into account during the cultivation by the agricultural machine.

3. Agricultural terminal according to Claim 1 or 2, **characterized in that** an adaption of the map view comprises at least one of the following parameters:
- creating track lines
- activating or deactivating an automatic mode
- calling up the field management
- activating a steering system
- calculating field boundaries
- marking obstacles.

## Revendications

1. Terminal agricole destiné à commander une machine agricole,
le terminal disposant d'un écran tactile,
le terminal étant relié à un système de détection de position et étant conçu pour afficher la position actuelle de la machine agricole sur une surface agricole dans une vue cartographique, le terminal étant en outre conçu pour afficher sur l'écran des éléments de commande tactiles destinés à adapter la vue cartographique (22, 23, 24, 25, 26) et à adapter des paramètres de réglage de la machine agricole (32, 33, 34, 35, 36, 37, 38, 39, 40, 41),
**caractérisé en ce que**,
le terminal est conçu pour représenter dans la vue cartographique au choix les éléments de commande destinés à adapter la vue cartographique (22, 23, 24, 25, 26) ou les éléments de commande destinés à régler les paramètres de réglage (32, 33, 34, 35, 36, 37, 38, 39, 40, 41) et pour afficher en outre en permanence une touche (28) sur l'écran tactile, l'actionnement de cette touche (28) déclenchant un passage entre l'affichage des éléments de commande de la vue cartographique (22, 23, 24, 25, 26) et l'affichage des éléments de commande destinés à adapter les paramètres de réglage (32, 33, 34, 35, 36, 37 , 38, 39, 40, 41).

2. Terminal agricole selon la revendication 1, **caractérisé en ce que** les paramètres de réglage comprennent le réglage de l'un au moins des paramètres suivants :
- quantité de production
- activation et/ou désactivation de tronçonnements déterminés
- caractéristiques de distribution
- largeur de travail
- profondeur de travail
et **en ce que** le terminal commande des actionneurs sur une machine agricole de manière à prendre en compte un changement de réglage des paramètres de réglage lors du traitement par la machine agricole.

3. Terminal agricole selon la revendication 1 ou 2, **caractérisé en ce qu'**une adaptation de la vue cartographique comprend l'un au moins des paramètres suivants :
- création de voies
- activation ou désactivation d'un mode automatique
- appel de la gestion de champ
- activation d'un système de direction
- calcul de limites de champ
- marquage d'obstacles.
